# EUROPÄISCHE PATENTSCHRIFT

(11) **EP 0 851 179 B1**
(45) Veröffentlichungstag und Bekanntmachung des Hinweises auf die Patenterteilung: **11.02.2004**
(21) Anmeldenummer: 97122522.2
(22) Anmeldetag: 19.12.1997
(51) Int. Cl.: F24F 11/00, F24F 3/044, G05D 23/19, G05D 27/02

(54) **Klimatisierungsvorrichtung und Verfahren zur Klimatisierung eines Raumes**
Air conditioning device and method of room air conditioning
Dispositif de conditionnement d'air et procédé de conditionnement d'air d'un local

(30) Priorität: 27.12.1996 DE 19654542; 15.10.1997 DE 19654955
(43) Veröffentlichungstag der Anmeldung: 01.07.1998
(73) Patentinhaber: Bauer, Albert, 80939 München (DE)
(72) Erfinder: Bauer, Albert, 80939 München (DE)
(74) Vertreter: Borchert, Uwe Rudolf, Dipl.-Ing.

(56) Entgegenhaltungen:
- DE-A- 2 949 605
- DE-A- 4 004 519
- US-A- 5 344 069
- US-A- 5 545 086

## Beschreibung

Die Erfindung betrifft eine Klimatisierungsvorrichtung, welche die Temperatur in mindestens einem Raum durch Belüftung mit beheizter oder gekühlter Luft auf einen vorgegebenen Temperatur-Sollwert regelt mit den im oberbegriff des Patentanspruchs 1 angegebenen Merkmalen. Die Erfindung betrifft auch ein Verfahren zur Klimatisierung eines Raumes nach Anspruch 8.

Klimatisierungsvorrichtungen sollen in den klimatisierten Räumen zu jeder Jahreszeit behagliche Aufenthaltsbedingungen schaffen, indem sie die Temperatur und Feuchtigkeit der Raumluft innerhalb fester Grenzen halten und für eine ausreichende Belüftung mit frischer Luft sorgen.

Im Winter ist die Zulufttemperatur höher als die Raumlufttemperatur, wenn die Luft gleichzeitig den Raum erwärmen soll, und im Sommer ist die Zuluft mit niedrigerer Temperatur einzublasen, um den Raum auf der gewünschten gekühlten Raumlufttemperatur zu halten.

Herkömmliche Klimatisierungsvorrichtungen wälzen dazu eine üblicherweise zu hohe Luftmenge um, deren Temperatur an den Heiz- und Kühlbedarf angepasst ist. Dabei wird es als nachteilig angesehen, dass auch dann eine Umwälzung eines großen Volumens Luft stattfindet, wenn die gewünschte Soll-Temperatur bereits erreicht ist. Zudem besteht die Gefahr, dass die Zuluft über den Zuluftkanal in den Raum eingeblasen und unmittelbar über den Abluftkanal den zu klimatisierenden Raum wieder verlässt. Es findet eine geringe Durchmischung der neuen Zuluft mit der vorhandenen Raumluft statt.

Weiterhin besteht bei Klimatisierung von mehreren Räumen das Problem, dass in den Räumen unterschiedliche Ist-Temperaturen vorhanden sind. Eine Anpassung der Temperaturen, die auf die Behaglichkeit in jedem Raum Rücksicht nimmt, ist nur schwer möglich.

Aus der DE 40 04 519, die die Merkmale des Oberbegriffs von Anspruch 1 bzw. von Anspruch 8 offenbart, ist eine Zuluft- und Abluftgeräte-Kombination für Lüftungs- und/oder Klimaanlagen bekannt. Hierbei wird die Fortluft zur Kühlung des Kühlaggregats verwendet. Die Führungsgröße der Regelung ist daher die Fortluft, um eine gewissen Mindestfortluftvolumenstrom zur Kühlung und somit zum Wärmeabtransport der Kühlaggregate zu gewährleisten.

Aus der DE 42 21 177 A1 ist eine Klimatisierungsvorrichtung bekannt, welche in eine zumindest einen Raum bildenden Zone mit einem Zuluftmotor die Zuluft über einen Zuluftkanal zuführt und mit einem Abluftmotor die Abluft über den Abluftkanal saugt. Der Raum ist in mehrere Raumzonen unterteilt. Zwischen diesen Raumzonen sind unterschiedliche Druckgradienten vorhanden. Mit einem Druckgradientenkontrollsystem soll verhindert werden, dass es zu Gasströmungen zwischen benachbarten Raumzonen kommt. Über das Druckgradientkontrollsystem wird dann der Zuluft- und der Abluftmotor geregelt. Beispielsweise wird die Leistung des Abluftmotors erhöht, wenn das Kontrollsystem einen bestimmten Druckgradienten registriert. Ziel dieser Vorrichtung ist eine möglichst gerichtete Strömung von Zuluftdüse zur Abluftdüse. Hiervon abweichende Querströmungen sollen durch die Regelung vermieden werden.

Der vorliegenden Erfindung liegt die Aufgabe zugrunde, eine Klimatisierungsvorrichtung anzugeben, die wirtschaftlicher arbeitet, behaglichere Raumbedingungen und ein optimales Durchmischen der Raumluft mit der Zuluft gewährleistet, um eine schnelle Anpassung an die Heiz-, Kühl-, Befeuchtungs- und Entfeuchtungs-Sollwerte zu erreichen.

Diese Aufgabe wird durch die kennzeichnenden Merkmale des Anspruches 1 bzw. des Anspruchs 8 in Verbindung mit ihren jeweiligen Oberbegriffsmerkmalen gelöst.

Weitere vorteilhafte Ausgestaltungen der Erfindung bilden die Gegenstände der Unteransprüche.

Der Erfindung liegt die Erkenntnis zugrunde, dass je größer der Überdruck in einem zu klimatisierenden Raum ist, desto besser ist die Durchströmung durch den Raum mit der eingeblasenen Zuluft. Damit erwärmt sich der Raum schneller, der Wirkungsgrad der Anlage wird erhöht und große Temperaturschwankungen im Raum, beispielsweise oben sehr warm und unten sehr kühl, aber auch Temperaturunterschiede über die Länge und Breite des Raumes können vermieden werden.

Eine gute Durchströmung des Raumes gewährleistet, dass in kürzester Zeit mit weniger Luftmenge ein Raum geheizt, gekühlt, befeuchtet oder entfeuchtet wird. Die geringere eingeblasene Luftmenge wird als angenehmer empfunden. Für die schnellere Anpassung der Heiz-, Kühl-, Befeuchtungs- und Entfeuchtungs-Sollwerte wird der Wirkungsgrad der Klimatisierungsvorrichtung verbessert.

Insbesondere wird dabei der Sollwert für den Regler des Abluftmotors in Abhängigkeit von der Außentemperatur und/oder der Zulufttemperatur und/oder dem Zuluftdruck bestimmt. Diese Regelung des Abluftmotors in Abhängigkeit von der Außentemperatur und/oder der Zulufttemperatur und/oder dem Zuluftdruck ist für die Optimierung der Durchströmung wichtig. Je höher nämlich die Zulufttemperatur oder der Zuluftdruck ist, desto größer müsste der Überdruck für eine günstige Durchströmung durch den zu klimatisierenden Raum mit der Zuluft sein. Je tiefer jedoch die Außentemperatur ist, desto höher ist in der Regel die Zulufttemperatur und desto höher muß somit der Überdruck im zu klimatisierenden Raum sein. Es muss also dann ein größerer Überdruck zur Gewährleistung einer optimalen Durchströmung durch den Raum mit der eingeblasenen Zuluft vorhanden sein.

Vorzugsweise wird auf der einen Seite der Istwert für den Regler des Abluftmotors durch den Kanaldifferenzdruck gebildet, der sich aus der Differenz zwischen dem absoluten Wert des Druckes im Zuluftkanal und dem absoluten Wert des Druckes im Abluftkanal ergibt. Damit wird erreicht, dass beispielsweise bei Klimatisierungsvorrichtungen für mehrere Räume Störungen des Überdrucks durch Fensteröffnen in einzelnen Räumen und somit ein sich durch die Regelung des Abluftmotors ergebendes ungewolltes Ansteigen des Überdrucks in den übrigen Räumen aufgrund des Druckverlustes in dem einen Raum vermieden wird.

Auf der anderen Seite ergibt sich vorzugsweise der Istwert für den Regler des Abluftmotors aus der Differenz zwischen dem Außendruck und dem Raumdruck.

Hierbei ändert sich vor allem der Raumüberdruck lediglich über einen vorbestimmten Temperaturbereich der Außentemperatur und/oder der Zulufttemperatur mit Änderung der Außentemperatur bzw. der Zulufttemperatur, wobei bei einer Außentemperatur vor diesem Temperaturbereich der Raumüberdruck jeweils eine bestimmte konstante Größe und bei einer Außentemperatur bzw. Zulufttemperatur nach diesem Temperaturbereich der Raumüberdruck jeweils eine weitere bestimmte konstante Größe aufweist. Vor allem fällt in dem Temperaturbereich der Raumdruck mit steigender Außentemperatur von einem Maximalüberdruck zu einem Minimalüberdruck.

Zwei gegenläufigen Forderungen wird dadurch Rechnung getragen. Auf der einen Seite ist es für eine gute Durchströmung des zu klimatisierenden Raumes erforderlich, dass der Überdruck so groß wie möglich ist. Auf der anderen Seite darf der Überdruck aber nicht zu groß sein, weil er sonst als unangenehm empfunden wird und bei zu großem Überdruck Türen sich selber öffnen bzw. sich nicht mehr öffnen oder nur noch mit hohem Kraftaufwand öffnen oder schließen lassen.

Damit es zu einer behaglichen Regelung kommt und ein Überdruck unabhängig von der Höhe oder dem Stockwerk des zu klimatisierenden Raumes gewährleistet wird, wird der Raumdifferenzdruck auf einer Höhe über 0 (Raumhöhe) gemessen. Raumhöhe entspricht Außenhöhe in bezug auf die Meereshöhe.

Gemäß einer Ausführungsform der Erfindung sind die Temperatur der Zuluft und der Kanaldruck der Zuluft miteinander derart gekoppelt, dass sowohl in Abhängigkeit von der Höhe der Raumtemperatur zur Höhe der Zulufttemperatur als auch in Abhängigkeit von der Höhe der Raumtemperatur zur Höhe des Sollwerts der Raumtemperatur der Kanaldruck der Zuluft in den Raum, die Räume oder Raumzonen erhöht oder vermindert wird.

Die hiermit erzielten Vorteile bestehen insbesondere darin, dass nicht ein großes Volumen temperierter Luft unnötig umgewälzt wird, sondern immer nur das Volumen, das für eine maximal schnelle Anpassung der Ist-Raumwerte an die vorgegebenen Sollwerte erforderlich ist.

Auf diese Weise werden nicht nur Energieeinsparungen erzielt, zudem wird es von den im Raum befindlichen Personen erheblich angenehmer empfunden, dass eine stärkere Luftbewegung nur dann stattfindet, wenn die Temperatur der eingeblasenen Luft weit von der Ist-Temperatur abweicht. Bei herkömmlichen Klimatisierungsvorrichtungen wird dagegen insbesondere während der morgendlichen Aufwärmphase auch bei einer Raumtemperatur, die stark unter dem Sollwert liegt, nur leicht angewärmte Zuluft in die Räume mit hohem Kanaldruck eingeblasen. Das wurde von den betroffenen Personen bisher als unangenehm empfunden, aber als unvermeidlich angesehen.

Nach dieser Ausführungsform der Erfindung wird deshalb erst dann beheizte Luft mit einem größeren Kanaldruck in den Raum eingeblasen, wenn die Temperatur der Zuluft deutlich über der vorgegebenen Soll-Temperatur des Raumes und damit insbesondere in der Aufwärmphase weit über dem Istwert des Raumes liegt. Durch eine Verhältnisregelung, bei der der Kanaldruck der Zuluft in einem festen Verhältnis zur Zulufttemperatur eingestellt wird, lässt sich eine entsprechende Kopplung des Kanaldrucks der Zulufttemperatur an die Zulufttemperatur erfindungsgemäß besonders vorteilhaft realisieren.

Vorzugsweise wird der Kanaldruck der Zuluft in den Raum, die Räume oder Raumzonen über die Leitung des Zuluftmotors eingestellt.

Über eine Auswahleinrichtung kann zwischen zwei Fördervolumenverhalten gewählt werden.

Zum einen wird für den Heizfall, wenn der Sollwert der Raumtemperatur kleiner als der Istwert der Raumtemperatur ist, der Kanaldruck der Zuluft mit steigender Raumtemperatur verringert. Entsprechend wird für den Kühlfall, wenn der Sollwert der Raumtemperatur größer als der Istwert der Raumtemperatur ist, der Kanaldruck der Zuluft mit sinkender Raumtemperatur verringert. Zum anderen wird für den Heizfall, wenn der Sollwert oder der Istwert der Raumtemperatur kleiner als die Zulufttemperatur und der Istwert der Raumtemperatur kleiner als der Sollwert der Raumtemperatur sind, der Kanaldruck der Zuluft mit steigender Zulufttemperatur erhöht. Entsprechend wird für den Kühlfall, wenn der Sollwert oder Istwert der Raumtemperatur größer als die Zulufttemperatur und der Istwert der Raumtemperatur größer als der Sollwert der Raumtemperatur sind, der Kanaldruck mit sinkender Zulufttemperatur erhöht. Die Erhöhung des Kanaldruckes der Zuluft wird als angenehm empfunden. Zudem wird der Wirkungsgrad der Heizungs- und Kühlvorrichtung verbessert, wie weiter unten noch ausgeführt wird.

Gemäß einer weiteren Ausführungsform der Erfindung ändert sich der Kanaldruck der Zuluft lediglich über einen vorbestimmten Temperaturbereich der Zulufttemperatur. Weist die Zulufttemperatur eine Höhe vor diesem Temperaturbereich auf, so ist der Kanaldruck der Zuluft jeweils einer bestimmten konstanten Größe zugeordnet. Weist die Zulufttemperatur eine Höhe nach dem Temperaturbereich auf, so ist der Kanaldruck der Zuluft jeweils einer weiteren bestimmten konstanten Größe zugeordnet.

Insbesondere steigt bei einer gegenüber der Raumtemperatur größeren Zulufttemperatur über den vorbestimmten Temperaturbereich der Kanaldruck der Zuluft von seiner Mindestleistung bis zu seiner Maximalleistung mit steigender Zulufttemperatur und fällt entsprechend mit sinkender Zulufttemperatur.

Durch die beiden Regelungen des Zuluftkanaldruckverhaltens wird auf der einen Seite ermöglicht, dass der Wirkungsgrad der Klimatisierungsvorrichtung verbessert wird. Mit höherem Kanaldruck der Zuluft wird auch eine schnellere und bessere Durchströmung des Raumes und somit eine schnellere Aufheizung der Räume erreicht. Auf der anderen Seite soll aber aus Gründen der Behaglichkeit eine zu große Luftströmung vermieden werden, da diese als unangenehm empfunden wird. Diesen gegenteiligen Anforderungen wird nunmehr optimal genüge getan.

Der Regelkreis, der den Kanaldruck der Zuluft regelt, ist hierbei dem Temperaturregelkreis unterlagert, wobei der Zuluftkanaldruck-Sollwert in einem festen Verhältnis zum Zulufttemperatur-Istwert einstellbar ist. Hiermit wird ein zu großes Überschwingen und Unterschwingen bei der Temperaturregelung vermieden. Die Raumtemperatur pendelt sich schneller auf die Sollwert-Temperatur ein.

Bei einer Klimatisierung mehrerer Räume wird die beheizte Zuluft allen Räumen über einen gemeinsamen Zuluftkanal zur Verfügung gestellt. Bei unterschiedlichen Soll- und Ist-Temperaturen aller Räume hat aber jeder Raum einen anderen Heizbedarf. Um diesem Umstand Rechnung zu tragen, sind gemäß einer weiteren Ausführungsform der Erfindung bei Klimatisierung von gleichzeitig mehreren Räumen oder Raumzonen die einzelnen Räume bzw. Raumzonen über jeweils eine ihnen zugeordnete Zuluftund Abluftleitung an den zentralen Zuluft- und Abluftkanal angeschlossen und es sind in den einzelnen Zuluft- und/oder Abluftleitungen Drosselklappen angeordnet, über die der Kanaldruck der Zuluft in dem Raum, die Räume oder Raumzonen eingestellt wird.

Dadurch werden ungewollte Luftbewegungen in Räumen vermieden, deren Istwert und Sollwert gleich oder annähernd gleich sind. Zudem wird erreicht, dass beispielsweise bei ganz geöffneter Frischluftklappe nicht unnötig viel Frischluft aufbereitet wird.

Die Regelung der Drosselklappen kann zusätzlich in Abhängigkeit von Zuluftdruck oder der Drehzahl des Zuluftmotors erfolgen.

Bei einer derartigen unabhängigen Regelung von Zulufttemperatur und individualer Raumtemperatur kann eine Situation auftreten, bei der ein einziger Raum möglichst schnell aufgeheizt werden muss, andere Räume aber, die bereits auf Soll-Temperatur liegen, möglichst wenig aufgeheizt werden sollen. Die Individualregelung dieser warmen Räume wird bei der erhöhten Zulufttemperatur versuchen, die Drosselklappen zu schließen. Damit werden aber diese Räume und die darin befindlichen Personen von der Frischluftzufuhr abgeschnitten.

Dieses Problem wird gemäß einer weiteren Ausführungsform dadurch vorteilhaft gelöst, dass auch bei einer Zulufttemperatur, die über der Soll-Temperatur liegt, in Räume, deren Ist-Temperatur der Soll-Temperatur entspricht, das erforderliche Mindestvolumen an Frischluft geblasen wird. Auf diese Weise wird erreicht, dass diese Räume mit ausreichend Frischluft versorgt werden, dennoch eine mögliche Erwärmung der Räume aufgrund einer Zulufttemperatur, die über der Soll-Temperatur liegt, soweit wie möglich vermieden wird. Die für das vorgegebene Mindestfrischluftvolumen erforderliche minimale Öffnung der Drosselklappen hängt von der Zulufttemperatur und dem Frischluftanteil der Zuluft ab, denn der Frischluftanteil der Zuluft wird, wenn möglich - Aufwärmphase in der Früh -, für eine maximal schnelle Aufheizung reduziert und durch Umluft ersetzt.

Gemäß einer Ausführungsform sind der Abluftkanal und der Zuluftkanal über einen Umluftkanal miteinander verbunden, wobei zumindest eine Fortluftklappe im sich an den Abluftkanal anschließenden Fortluftkanal, zumindest eine Mischluftklappe im Umluftkanal und zumindest eine Frischluftklappe in dem dem Zuluftkanal vorgeschalteten Frischluftkanal vorgesehen sind.

Gemäß einer weiteren Ausführungsform wird der Mindestquerschnitt der Drosselklappen in Abhängigkeit von der Öffnung der Frischluftklappe, der Fortluftklappe und der Mischluftklappe eingestellt, so dass in jeder Regelungssituation die Mindestfrischluftmenge gewährleistet wird.

Bei geregeltem Kanaldruck der Zuluft und der Abluft sind die Öffnungsstellungen der einander zugeordneten Drosselklappen in einem Raum oder in einer Raumzone gleich.

Analog zu der Heizungsregelung kann auch eine Kühlungsregelung erfolgen.

Für die Temperaturregelung werden Regler verwendet. In der Praxis neigen diese Regler zu einem Überschwingen und Unterschwingen der Regelgröße.

Gemäß einer weiteren Ausführungsform der Erfindung ist jeweils die Stellgröße zumindest eines Reglers, insbesondere des Temperaturreglers, an eine nachgeordnete Schalteinrichtung angeschlossen, und die Schalteinrichtung wählt bei einem Überschwingen der Regelgröße einen ihr vorgegebenen Wert für die Stellgröße aus, der deutlich unter dem gleichzeitig von dem Regler gewählten Wert liegt.

Ein solches Verhalten lässt sich vorteilhaft durch eine zusätzliche Steuereinrichtung und eine Minimumauswahleinrichtung realisieren. Diese zusätzliche Steuereinrichtung liefert in Abhängigkeit von der Regeldifferenz einen vorgegebenen minimalen Wert für die Stellgröße, wenn ein Überschwingen der Regelgröße auftritt, und einen vorgegebenen maximalen Wert für die Stellgröße, wenn der Istwert der Temperatur (der Regelgröße) unter dem Sollwert liegt. Die Minimumauswahleinrichtung wählt dann aus den von dem Regler und der zusätzlichen Steuereinrichtung zur Verfügung gestellten Werten jeweils das Minimum aus und gibt den ausgewählten Wert als Stellgröße weiter. Auf diese Weise übernimmt die zusätzliche Steuereinrichtung immer dann die Kontrolle über die Stellgröße, wenn aufgrund der Stellgröße des Reglers ein Überschwingen in der Regelgröße auftritt.

Gemäß einer weiteren Ausführungsform der Erfindung sind eine Frischluftklappe in einem dem Zuluftkanal vorgeschalteten Frischluftkanal, eine Mischluftklappe in einem den Zuluftkanal mit dem Abluftkanal verbindenden Umluftkanal, und eine Fortluftklappe in einem sich an den Abluftkanal anschließenden Fortluftkanal vorgesehen, wobei die Stellungen der Frischluftklappe, der Fortluftklappe und der Mischluftklappe gemeinsam in Abhängigkeit von der Drehzahl des Zuluftmotors oder vom Kanaldruck der Zuluft geregelt werden, und wobei bis zu einer gewissen Mindestöffnung zur Gewährleistung eines Frischluftminimums mit steigender Drehzahl des Zuluftmotors und/oder mit steigendem Kanaldruck der Zuluft die Öffnungsquerschnitte der Frischluftklappe und der Fortluftklappe verkleinert sowie der Öffnungsquerschnitt der Mischluftklappe vergrößert werden können.

Die Öffnungsstellung der Frischluftklappe und die Öffnungsstellung der Fortluftklappe sind immer.gleich groß. Die Öffnungsstellung der Mischluftklappe ist immer die Differenz der Öffnungsstellung der Frischluftoder Fortluftklappe zu 100 %, z. B. sind die Öffnungsstellungen der Frischluftklappe und Fortluftklappe jeweils 70 %, dann ist die Öffnungsstellung der Mischluftklappe 30 %. Weist die Mischluftklappe eine Öffnungsstellung von 70 % auf, so sind die Öffnungsstellungen der Frischluft- und Fortluftklappe jeweils 30 %.

In einer weiteren bevorzugten Ausführungsform der Erfindung wird mehr als ein Raum von einer zentralen Anlage klimatisiert. Auch bei unterschiedlichem Heizbedarf der einzelnen Räume muss über die Zuluft eine ausreichende Heizkapazität für alle Räume zur Verfügung gestellt werden. Dies kann u.a. dadurch erreicht werden, dass sich der Heizbedarf an der Ist-Temperatur des kältesten Raumes bemisst, um auch diesen Raum in kurzer Zeit auf Soll-Temperatur bringen zu können. Daher wird nach einer Ausführungsform der Erfindung bei Klimatisierung von gleichzeitig mehreren Räumen die Ist-Temperatur jedes Raumes einer zentralen Regelungseinrichtung zugeführt, und ein aus diesen einzelnen Istwerten individuell zu ermittelnder Temperaturwert als Istwert für den Heizungsregler zugeführt.

Nach einer weiteren Ausführungsform der Erfindung ist eine Befeuchtungseinrichtung vorgesehen, die die Zuluft im Zuluftkanal befeuchtet, wobei die Befeuchtungseinrichtung sowohl in Abhängigkeit von der Raumfeuchte oder der Abluftfeuchte als auch der Zulufttemperatur geregelt wird.

Gemäß einer weiteren Ausführungsform der Erfindung sind eine in den Zuluftkanal eingebrachte erste Heizungsvorrichtung, eine der ersten Heizungsvorrichtung im Zuluftkanal nachgeschaltete Kühlvorrichtung und eine der Kühlvorrichtung im Zuluftkanal nachgeschaltete zweite Heizungsvorrichtung zur Erwärmung, Kühlung und Entfeuchtung der Zuluft vorgesehen, wobei die zweite Heizungsvorrichtung in Abhängigkeit von der Istwert-Feuchte zur Sollwert-Feuchte geregelt wird.

Insbesondere steigt mit steigender Istwert-Feuchte, die bereits über der Sollwert-Feuchte liegt, die Heizleistung der zweiten Heizungsvorrichtung.

Die Heizleistung der zweiten Heizungsvorrichtung wird entweder mit einem Regler geregelt oder steigt mit steigender Istwert-Feuchte über einen vorbestimmten Feuchtebereich der Raumfeuchte, bei einer Raumfeuchte vor diesem Feuchtebereich weist die Heizleistung jeweils eine bestimmte konstante Größe und bei einer Raumfeuchte nach dem Feuchtebereich weist die Heizleistung jeweils eine weitere bestimmte konstante Größe auf.

Hierdurch wird erreicht, dass eine Entfeuchtung über Erhöhung der Raumtemperaturen bewirkt wird, sofern der Istwert der Raumtemperatur unter dem Grenzwert bleibt, ab dem der Kühlvorgang eingeleitet wird. Es wird also erst dann gekühlt, wenn der Istwert der Raumtemperatur größer als der Sollwert der Raumtemperatur zuzüglich der von der Außentemperatur abhängigen Temperaturverschiebung ist. Durch das Aufheizen und damit das Entfeuchten des Raumes über die steigende Temperatur wird der Raum schnell und mit einem vergleichsweise geringerem Energieaufwand entfeuchtet.

Der Kanaldruck der Zuluft wird während des Entfeuchtungsvorgangs nicht erhöht.

Um eine Mindestfrischluftmenge in dem Raum bzw. den Räumen zu garantieren, erfolgt die Regelung der Frischund der Fortluftklappe in Abhängigkeit von der Öffnungsstellung der Mischluftklappe.

Im einfachsten Fall wird mit der Klimatisierungsvorrichtung ein einziger Raum temperiert und belüftet. Die Regelung einer Mehrraumklimatisierung wird im Ausführungsbeispiel anhand der Zeichnung näher beschrieben. Es zeigen:
- Fig. 1: eine schematische Darstellung des Luftkreislaufs einer Klimatisierungsvorrichtung nach der Erfindung;
- Fig. 2: einen Blockschaltplan mit den wichtigsten Elementen der Regelungs- und Steuerungseinrichtungen des Ausführungsbeispiels;
- Fig. 3: einen Blockschaltplan mit wichtigen Elementen des Temperaturregelkreises aus Fig. 2;
- Fig. 4: einen Blockschaltplan des Fördervolumenregelkreises der Zuluft aus Fig. 2;
- Fig. 5: einen Blockschaltplan des individuellen Temperaturregelkreises für jeden Raum aus Fig. 2;
- Fig. 6a: den Zusammenhang zwischen der Zulufttemperatur und dem Zuluftdruck für das Ausführungsbeispiel, wenn die Istwert-Raumtemperatur kleiner als die Sollwert-Raumtemperatur ist;
- Fig. 6b: den Zusammenhang zwischen der Raumtemperatur und dem Zuluftdruck für das Ausführungsbeispiel, wenn die Istwert-Raumtemperatur größer oder gleich der Sollwert-Raumtemperatur ist;
- Fig. 7: den Blockschaltplan des Temperaturreglers des Ausführungsbeispiels;
- Fig. 8a: den Blockschaltplan des Reglers des Abluftmotors des Ausführungsbeispiels;
- Fig. 8b: den Blockschaltplan mit den wichtigsten Elementen aus Fig. 8a;
- Fig. 8c: den Zusammenhang zwischen der Außentemperatur und dem Sollwert des Raumdifferenzdruckes für den Regler des Abluftmotors;
- Fig. 9: den Zusammenhang zwischen der Raumabluftfeuchte und der Stellgröße für den Nacherhitzer und
- Fig. 10: ein Ablaufdiagramm mit den wichtigsten am Aufheizvorgang beteiligten Blockschaltbildelementen.

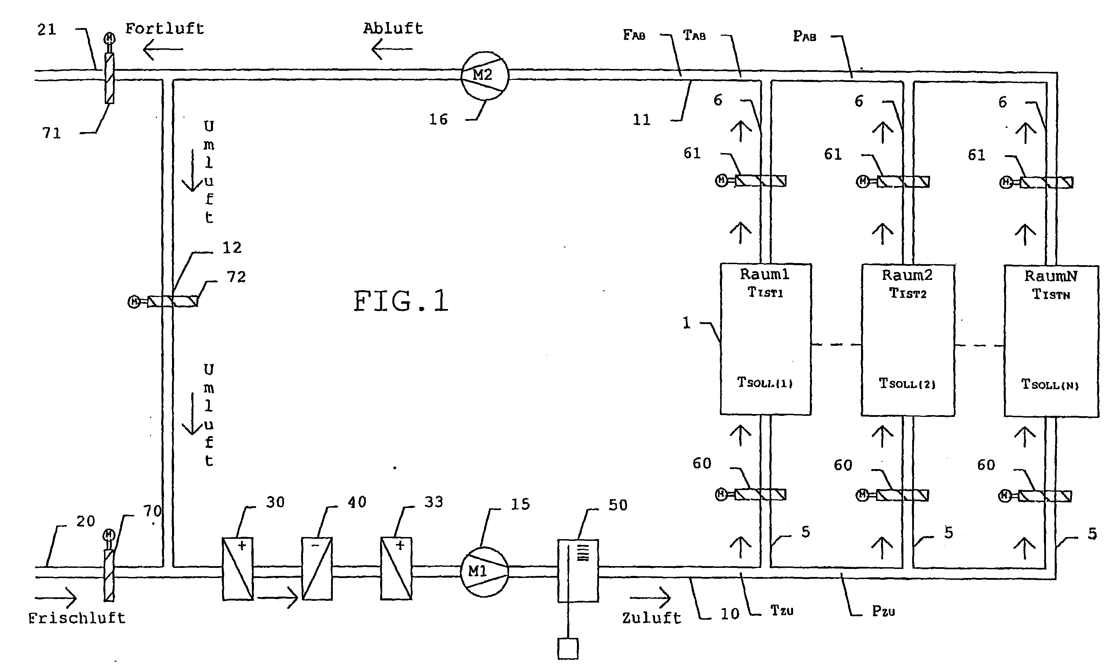

In Fig. 1 ist schematisch der Luftkreislauf einer Mehrraumklimatisierung dargestellt. Von den zu klimatisierenden Räumen 1 führen auf der einen Seite Zuluftleitungen 5 zu einem Zuluftkanal 10 und auf der anderen Seite Abluftleitungen 6 zu einem Abluftkanal 11.

In der Zuluftleitung 5 ist jeweils eine Drosselklappe 60 und in der Abluftleitung 6 jeweils eine Drosselklappe 61 angeordnet.

Der Zuluftkanal 10 und der Abluftkanal 11 sind über einen Umluftkanal 12 miteinander verbunden.

Dem Zuluftkanal 10 ist ein Frischluftkanal 20 vorgeschaltet und dem Abluftkanal 11 ist ein Fortluftkanal 21 nachgeschaltet.

Im Frischluftkanal 20 sind eine Frischluftklappe 70, im Umluftkanal 12 eine Mischluftklappe 72 und im Fortluftkanal 21 eine Fortluftklappe 71 vorgesehen.

Im Zuluftkanal 10 sind in Strömungsrichtung der Luft hintereinander eine erste Heizungsvorrichtung 30, eine Kühlvorrichtung 40, eine zweite Heizungsvorrichtung 33, ein Zuluftmotor 15 und eine Befeuchtungsvorrichtung 50 angeordnet.

Im Zuluftkanal 10 wird durch den Zuluftmotor 15 ein Luftdruck P_{ZU} erzeugt, der dafür sorgt, dass die Zuluft mit ausreichendem Fördervolumen in die zu klimatisierenden Räume 1 eingeblasen wird.

Entsprechend wird im Abluftkanal 11 durch den Abluftmotor 16 ein Unterdruck P_{AB} erzeugt, der die Raumluft absaugt.

Im einfachsten Fall, dem reinen Belüftungsfall - Bürobetrieb -, wird die abgesaugte Raumluft (= die Abluft) über den Abluftkanal 11 und den Fortluftkanal 21 an die Außenluft abgegeben und über den Frischluftkanal 20 wird die benötigte Zuluft als Frischluft in den Zuluftkanal 10 angesaugt. Dazu sind die Frischluftklappe 70 und die Fortluftklappe 71 geöffnet und die Mischluftklappe 72 geschlossen. Die Frischluftklappe 70 und die Fortluftklappe 71 weisen dabei immer gleiche Öffnungsstellungen auf.

Um eine Aufwärmung der klimatisierten Räume 1 zu ermöglichen, strömt die angesaugte Frischluft durch die erste Heizungsvorrichtung 30 - Vorerhitzer -, über die die angesaugte Luft je nach Heizbedarf auf die erforderliche Zulufttemperatur T_{ZU} gebracht wird. Nach Passieren der nicht eingeschalteten Kühlvorrichtung 40 und der zweiten Heizvorrichtung 33 - Nacherhitzer - wird sie der Befeuchtungseinrichtung 50 zugeleitet, welche der Luft die nötige Feuchtigkeit zuführt.

Statt der ersten Heizungsvorrichtung 30 ist bei einem erforderlichen Kühlen der zu klimatisierenden Räume die Kühlvorrichtung 40 in Betrieb. Bei zu großer Feuchte ist, statt der Befeuchtungsvorrichtung 50, der Nacherhitzer 33 zum Entfeuchten in Betrieb. Um ein rascheres Aufheizen zu gewährleisten, können sowohl die erste Heizvorrichtung 30 als auch die zweite Heizvorrichtung 33 in Betrieb sein. Dies ist jedoch für den Heizfall, nicht für den Entfeuchtungsfall möglich.

Die so aufbereitete Luft wird über den Zuluftmotor 15, den Zuluftkanal 10 und die Zuluftleitungen 5 mit den Drosselklappen 60 den einzelnen zu klimatisierenden Räumen zugeführt. Das Volumen der individuell in jeden einzelnen Raum eingeblasenen und abgesaugten Luft kann durch die in den Zuluftleitungen 5 und in den Abluftleitungen 6 angeordneten Drosselklappen 60, 61 individuell reguliert werden.

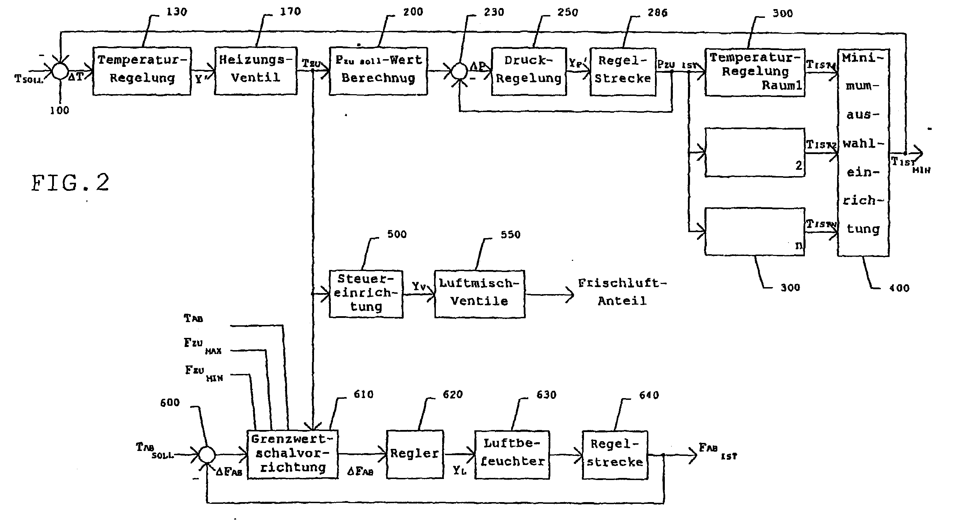

Bei erhöhtem Heizbedarf, beispielsweise in der morgendlichen Aufwärmphase, ist es vorteilhaft, die Räume nicht nur mit angesaugter Frischluft zu versorgen, sondern einen Teil der abgesaugten Raumluft wiederholt zu verwenden, denn bei der gleichzeitigen Aufwärmung und Belüftung liegt das erforderliche Zuluftvolumen weit über dem Frischluftmindestvolumen. Deshalb wird in Abhängigkeit von der Zulufttemperatur T_{ZU} über eine Steuerungseinrichtung 500 in Fig. 2 ein Stellwert y_{V} berechnet und den Luftklappen 550 in Fig. 2 bzw. 70, 71, 72 in Fig. 1 zugeleitet.

Während die Frischluftklappe 70 und die Fortluftklappe 71 das gleiche Steuersignal erhalten, wird der Mischluftklappe 72 im Umluftkanal 12 das genau entgegengesetzte Steuersignal zugeleitet. Die Öffnungsstellung der Mischluftklappe 72 ist immer die Differenz zur Öffnungsstellung der Frischluftklappe 70 oder der Fortluftklappe 71 zu 100 %. Beispielsweise beträgt die Öffnungsstellung der Frischluftklappe 70 und der Fortluftklappe 71 jeweils 70 %, so beträgt die Öffnungsstellung der Mischluftklappe 30 %. Weist die Mischluftklappe eine Öffnungsstellung von 70 % auf, so ist die Öffnungsstellung der Frischluftklappe 70 und der Fortluftklappe 71 jeweils 30 %.

Auf diese Weise lässt sich ein bestimmter Anteil der abgesaugten Raumluft über den Umluftkanal 12 wieder der Zuluft zuleiten. Gleichzeitig wird über den Frischluftkanal 20 und die Frischluftklappe 70 der Zuluft ein entsprechender Frischluftanteil zugeführt. Dieser Frischluftanteil beträgt beim Ausführungsbeispiel im Belüftungsfall - während der Bürozeit - bis zu 100 %. Während der Bürozeit wird also die Mischluftklappe 72 in der Regel nicht geöffnet, die Frischluftklappe 70 und die Fortluftklappe 71 sind normal zu je 100 % geöffnet. Bei erhöhtem Heizbedarf und einem maximalen Zuluftdruck P_{ZU MAX} sinkt der Frischluftanteil auf ungefähr 10 % ab - Aufwärmphase in der Früh -.

Bei der Klimatisierung wird aus den gemessenen Raumtemperaturen T_{RAUM IST 1}, T_{RAUM IST 2} bzw. T_{RAUM IST N} in der Minimumauswahleinrichtung 400 in Fig. 2 der niedrigste Wert T_{RAUM IST MIN} bestimmt und zur Berechnung des Heizbedarfs herangezogen. Dazu wird die Ist-Temperatur T_{RAUM IST MIN} im Blockschaltbildelement 100 von der vorgegebenen (maximalen) Soll-Temperatur T_{RAUM SOLL} (aller Räume) subtrahiert. Aufgrund der so berechneten Temperaturdifferenz T (Regeldifferenz) wird von der Temperaturregelung 130 ein geeigneter Stellwert y' für das Heizungsventil 170 der Heizungsvorrichtung 30 in Fig. 1 bestimmt.

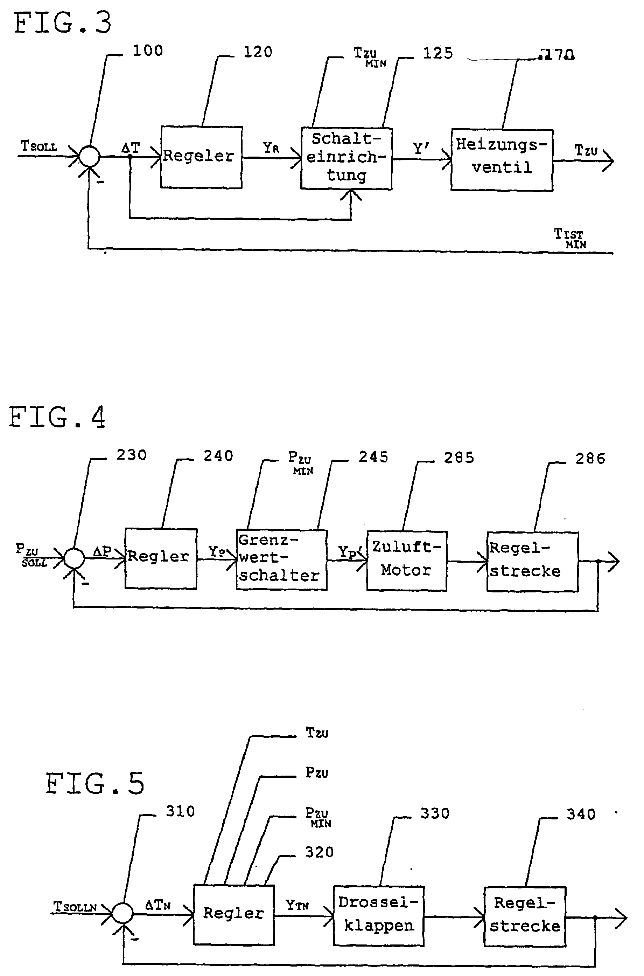

Die vom Regler 120 in Fig. 3 der Temperaturregelung berechnete Stellgröße y_{R} wird von der nachgeordneten Schalteinrichtung 125 überwacht, um ein mit herkömmlichen Reglern übliches Überschwingen der Temperatur weitgehend zu verhindern. Im Normalfall, solange T_{RAUM} _{IST MIN} unter T_{RAUM SOLL} liegt, gibt die Steuereinrichtung 125 die Stellgröße y_{R} unverändert als y' an das Heizventil 170 weiter. Überschreitet aber T_{RAUM IST MIN} die Soll-Temperatur T_{RAUM SOLL}, dann wird anstelle von y_{R} eine sehr viel kleinere Stellgröße y' an das Heizventil 170 weitergeleitet. Der Wert der Stellgröße y' stellt in diesem Fall die minimal benötigte Zulufttemperatur T_{ZU MIN} sicher, die abhängig ist von der Außentemperatur T_{A}. Auf diese Weise wird bei dem Ausführungsbeispiel ein maximales Überschwingen um die Soll-Temperatur von nur 0,3 °C erreicht, ein Unterschwingen findet so gut wie nicht statt.

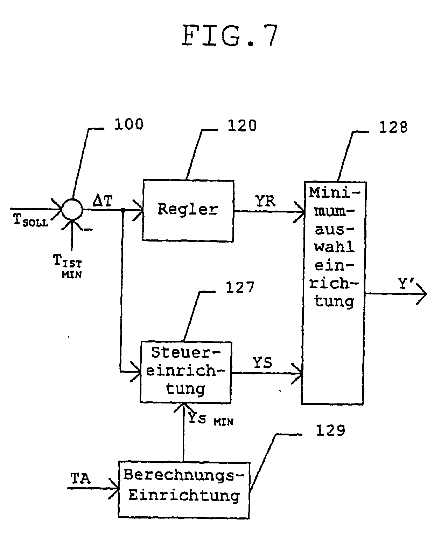

Die Überwachung des Stellsignals y _{R} des Reglers 120 wird in dem Ausführungsbeispiel durch eine Schalteinrichtung 127 in Fig. 7 und eine Minimumauswahleinrichtung 128 realisiert. Die Steuereinrichtung 127 erzeugt gleichzeitig zum Regler 120 ein Stellsignal y_{S} , das einen maximal großen Wert annimmt, solange die Soll-Temperatur T_{RAUM SOLL} über der Ist-Temperatur T_{RAUM IST MIN} liegt, ein bis zu sehr niedriges Stellwertsignal y_{S MIN}, sobald die Ist-Temperatur den Sollwert übersteigt.

Das Stellwertsignal y_{S MIN} der Steuereinrichtung 128 wird zum Abschneiden des sonst auftretenden Unterschwingens der Temperaturregelung in Abhängigkeit von der Außentemperatur T_{A} , mit der die Frischluft angesaugt wird, von der Berechnungseinrichtung 129 eingestellt.

Die Minimumauswahleinrichtung 128 wählt von den beiden ihr zur Verfügung stehenden Stellwertsignalen y_{R} und y_{S} jeweils das kleinere aus und gibt dieses als y' an das Heizungsventil 170 weiter. Auf diese Weise wird ein Überschwingen der zu regelnden Temperatur so weit wie möglich unterbunden.

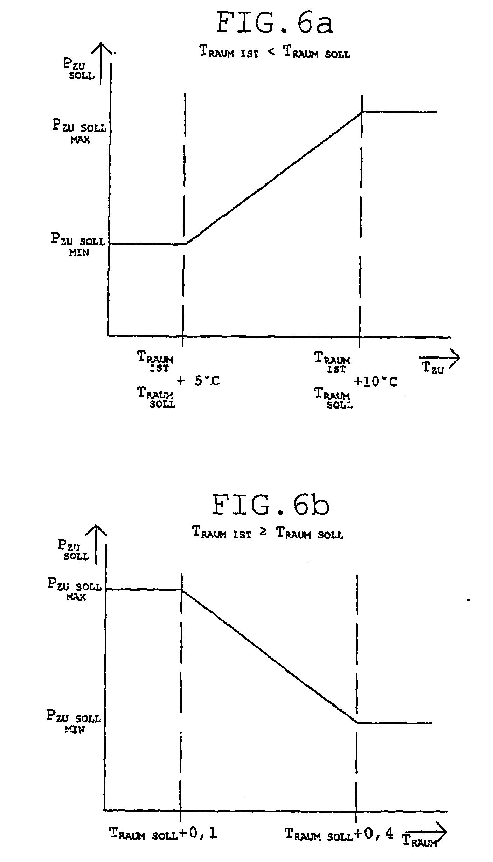

In Abhängigkeit von der Temperatur der Zuluft wird das Fördervolumen des Zuluftmotors 15 über den erzeugten Zuluftdruck P_{ZU IST} eingestellt. Dazu wird zunächst in einer P_{ZU SOLL}-Wert-Berechnungseinrichtung 200 in Fig. 2 ein Sollwert P_{ZU SOLL} für den Zuluftdruck bestimmt. Der Zusammenhang zwischen der Zulufttemperatur T_{ZU} und dem Zuluftdruck P_{ZU SOLL} ist in Fig. 6a wiedergegeben, und zwar für den Fall, dass die Raumtemperatur T_{RAUM IST} kleiner als der Sollwert der Raumtemperatur T_{RAUM SOLL} ist.

Erst wenn die Zulufttemperatur deutlich über der Sollwert-Temperatur liegt, im Ausführungsbeispiel um 5 °C, wird der Solldruck der Zuluft erhöht. Bei einer Zulufttemperatur unterhalb dieser Schwelle wird nur das zur Belüftung der Räume notwendige Luftvolumen in die klimatisierten Räume eingeblasen.

Der Zusammenhang zwischen der Raumtemperatur T_{RAUM IST} und dem Sollwert des Zuluftdrucks P_{ZU SOLL} ist in Fig. 6b wiedergegeben und zwar für den Fall, dass die Raumtemperatur T_{RAUM IST} größer als der Sollwert der Raumtemperatur T_{RAUM SOLL} oder gleich dem Sollwert der Raumtemperatur T_{RAUM SOLL} ist.

Mit steigender Raumtemperatur T_{RAUM IST}, wenn die Raumtemperatur größer als der Sollwert der Raumtemperatur T_{RAUM SOLL} ist, sinkt die Zulufttemperatur T_{ZU} und der Sollwert des Zuluftdruckes P_{ZU SOLL} von seinem Maximaldruck P_{ZU SOLL MAX} bis zu seinem Minimaldruck P_{ZU SOLL MIN}.

Der von der P_{ZU SOLL}-Wert-Berechungseinrichtung 200 in Fig. 2 bestimmte Zuluftsolldruck P_{ZU SOLL} wird im Blockschaltbildelement 230 mit dem Zuluft-Ist-Druck P_{ZU IST} verglichen. Die Druckdifferenz Δ P wird der Druckregelung 250 zugeleitet.

Der vollständige Druckregelkreis ist in Fig. 4 dargestellt. Die Regeldifferenz Δ P wird dem Regler 240 zugeleitet, der die Stellgröße y_{P} einstellt. Ein Grenzwertschalter 245 überwacht den Stellwert y_{P}, damit ein vorgegebener Mindestdruck P_{ZU MIN}, der einem vorgegebenen Mindestbelüftungsvolumen entspricht, nicht unterschritten wird. Mit dem Stellwert y_{P}' des Grenzwertschalters 245 wird der Lüfter 285 in Fig. 4 bzw. 15 in Fig. 1 gesteuert, der den Druck der Regelstrecke 286 erzeugt.

Mit einem entsprechenden Regelkreis wird durch den Abluftmotor 16 im Abluftkanal 11 ein Unterdruck P_{AB} erzeugt, der ein zur Wahrung eines vorbestimmten Überdrucks in den Räumen entsprechendes Luftvolumen wieder absaugt. Die Regelung des Abluftmotors 16 wird weiter unten noch beschrieben.

Die temperierte Zuluft im Zuluftkanal 10 steht über die Zuluftleitungen 5 zur Belüftung und Aufheizung aller Räume 1 zur Verfügung. Mit Hilfe der Drosselklappen 60, 61 wird das Volumen der individuell in jeden Raum eingeblasenen und abgesaugten Luft an den jeweiligen tatsächlichen Heizbedarf angepasst. Dazu werden jeweils die Soll-Temperatur, die Ist-Temperatur, die Zulufttemperatur und das Mindestbelüftungsvolumen für die Einstellung der Drosselklappen herangezogen. Dieser Regelkreis, in Fig. 2 als ein Blockschaltbildelement 300 dargestellt, ist in Fig. 5 wiedergegeben.

Im Blockschaltbildelement 310 wird die individuelle Soll-Temperatur T_{SOLL N} mit der entsprechenden Ist-Temperatur T_{IST N} verglichen; die dabei festgestellte Regeldifferenz Δ T_{N} wird dem Regler 320 zugeleitet. Dieser erzeugt aufgrund der Temperaturdifferenz Δ T_{N} der Zulufttemperatur T_{ZU} und des Zuluftdrucks P_{ZU} ein Stellsignal y_{T N} das einen Minimalwert nicht unterschreiten darf, der sich aus dem aktuellen Zuluftdruck P_{ZU} und dem Minimaldruck P_{ZU MIN} ergibt. Das Stellsignal y_{T N} , wird den Drosselklappen 330 in Fig. 5 und 60, 61 in Fig. 1 zugeleitet. Die Regelstrecke dieses Individualtemperaturregelkreises wird durch das Blockschaltbildelement 340 repräsentiert.

Die Drosselklappen 60, 61 werden in Abhängigkeit des in jedem einzelnen Raum eingestellten Temperatur-Sollwerts T_{RAUM SOLL} des in jedem einzelnen Raum gemessenen Temperatur-Istwerts T_{RAUM IST} des Temperaturwerts der Zulufttemperatur T_{ZU} sowie in Abhängigkeit des Zuluftdrucks P_{ZU} und/oder der Drehzahl des Zuluftmotors geregelt.

Wie oben ausgeführt, gewährleistet der Regelkreis zur Einstellung des Öffnungsquerschnitts der Drosselklappen 60, 61 einen bestimmten, in Abhängigkeit des Zuluftdrucks sich ergebenden Mindestöffnungsquerschnitt, der bei der Einstellung der Drosselklappen 60, 61 nicht unterschritten wird. Dieser Mindestöffnungsquerschnitt wird dabei so eingestellt, dass jeder Raum ein vorgegebenes absolutes Mindestfrischvolumen erhält.

Der Mindestöffnungsquerschnitt der Drosselklappen 60, 61 wird ebenfalls in Abhängigkeit von der Öffnung der Frischluftklappe 70, der Fortluftklappe 71 und der Mischluftklappe 72 eingestellt.

Bei geregeltem Fördervolumen der Zuluft und der Abluft sind die Öffnungsstellungen der einander zugeordneten Drosselklappen 60, 61 in einem Raum 1 gleich.

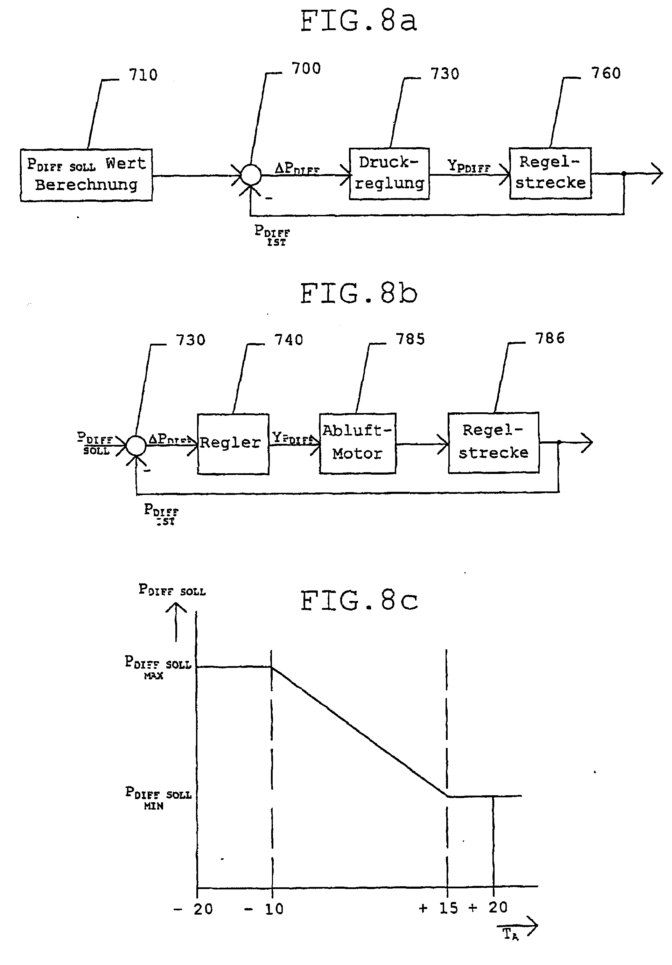

Bei der Regelung des Abluftmotors 785 nach Fig. 8b bzw. 16 nach Fig. 1 wird der Sollwert für den Abluftmotor in Abhängigkeit von der Außentemperatur in der P_{DIFF SOLL}-Wert-Berechnungseinrichtung 710 berechnet, wobei dieser Sollwert einen gegenüber dem Außendruck P_{A} in Abhängigkeit von der Außentemperatur festgelegten Raumüberdruck P_{DIFF SOLL} bildet. Der Sollwert P_{AB SOLL} kann auch in Abhängigkeit von der Zulufttemperatur und/oder dem Zuluftdruck bestimmt werden.

Der Zusammenhang zwischen der Außentemperatur T_{A} und dem Sollwert für den Raumüberdruck P_{DIFF SOLL}, der sich aus der Differenz zwischen dem Sollwert des Abluftdruckes P_{AB SOLL} und dem Außendruck P_{A} ergibt, ist in Fig. 8c wiedergegeben. Wenn die Außentemperatur T_{A} einen bestimmten Grenzwert übersteigt, beispielsweise eine Außentemperatur von - 10 °C, fällt der Sollwert P_{DIFF SOLL} des Abluftmotors mit steigender Außentemperatur von seinem Maximum P_{DIFF SOLL MAX} bis zu seinem Minimum P_{DIFF SOLL MIN} bei einem weiteren Grenzwert, beispielsweise bei einer Außentemperatur von + 15 °C. Bei einer Außentemperatur vor oder nach diesem durch die beiden Grenzwerte festgelegten Temperaturbereich entspricht der Sollwert des Abluftmotors P_{DIFF SOLL} entweder dem maximalen Raumdifferenzdruck P_{DIFF SOLL MAX} oder dem minimalen Raumdifferenzdruck P_{DIFF SOLL MIN}.

Der von der P_{DIFF SOLL}-Wert-Berechnungseinrichtung 710 in Fig. 8a bestimmte Sollwert des Abluftmotors P_{DIFF SOLL} wird im Blockschaltbildelement 700 mit dem Raumdifferenz-Istdruck P_{DIFF IST} bei einem Raum und bei mehreren Räumen mit dem Zuluft- und Abluftkanaldifferenzdruck verglichen. Die Druckdifferenz Δ P_{DIFF} wird der Druckregelung 730 zugeleitet.

Der vollständige Druckregelkreis ist in Fig. 8b dargestellt. Die Regeldifferenz Δ P_{DIFF} wird dem Regler 740 zugeleitet, der die Stellgröße y_{P DIFF} einstellt. Wenn in einem Großraumbüro mehrere Fenster geöffnet sind, kann der Ablüfter ganz ausgeschaltet werden - nur so kann ein leichter Überdruck eingehalten werden -.

Mit dem Stellwert y_{P DIFF} des Reglers 740 wird der Abluftmotor 785.in Fig. 8b bzw. 16 in Fig. 1 gesteuert, der den Druck der Regelstrecke 786 erzeugt.

Der Istwert für den Regler 740 des Abluftmotors 16 bzw. 785 wird durch den Raumdifferenzdruck P_{DIFF IST} gebildet, der sich aus der Differenz zwischen dem Außendruck P_{A} und dem Raumdruck P_{RAUM IST} = P_{AB IST} ergibt.

Die beschriebene Ausführungsform kann analog zur Kühlung verwendet werden.

In einem zusätzlichen Regelkreis wird die Luftfeuchte in den klimatisierten Räumen geregelt. Sie wird vorzugsweise als relative Luftfeuchte (in Prozent des Dampfdruckes bei voller Sättigung) gemessen und ausgedrückt, im folgenden vereinfacht mit dem Symbol F bezeichnet. Es ist aber durchaus möglich, anstelle der relativen Luftfeuchte die absolute Luftfeuchtigkeit (in g Wasserdampf auf ein m³ Luft), den Dampfdruck, die spezifische Feuchte (in g H₂O auf 1 kg feuchte Luft) oder als Mischungsverhältnis (in g H₂O auf 1 kg trockene Luft) zu verwenden. Bei Verwendung der relativen Luftfeuchte ist die Abhängigkeit von der Sättigungsgrenze vorteilhaft in den Wert integriert. Nach den VDI-Lüftungsregeln sollte die Luftfeuchtigkeit im Winter bei 20 °C Raumlufttemperatur 35 bis 70 % relative Luftfeuchte betragen, im Sommer bei 22 °C Raumlüfttemperatur 70 %, bei 25 °C 60 %.

Im Blockschaltbildelement 600 in Fig. 2 wird die Differenz von Soll-Luftfeuchte F_{AB SOLL} und Ist-Luft-feuchte F_{AB IST} ermittelt, wobei stellvertretend für die Luftfeuchte in den einzelnen Räumen im Ausführungsbeispiel die Feuchte der Abluft F_{AB} gemessen und eingestellt wird. Die ermittelte Feuchtedifferenz Δ F_{AB} wird zunächst einer Grenzwertschaltvorrichtung 610 zugeleitet, die aufgrund vorgegebener minimaler und maximaler Feuchtegrenzwerte F_{AB MIN} und F_{AB MAX} in Abhängigkeit von der Zu- und Ablufttemperatur verhindert, dass bei der Feuchteregelung an irgendeiner Stelle im Luftkreislauf die Sättigungsgrenze überschritten wird. Von dieser Grenzwertschaltvorrichtung 610 wird nun eine korrigierte Regeldifferenz Δ F_{AB}' dem Regler 620 zugeführt, der den Luftbefeuchter 630 über das Steuersignal y_{L} steuert. Dadurch wird die Feuchtigkeit der Zuluft F_{ZU} eingestellt. Die Regelstrecke wird durch das Blockschaltbildelement 640 repräsentiert.

Die zweite Heizungsvorrichtung 33 kann im Heizfall auch das Signal y' der ersten Heizungsvorrichtung 30 erhalten. Die zweite Heizungsvorrichtung 33 dient aber als Nacherhitzer im wesentlichen zum Entfeuchten. Diese zweite Heizungsvorrichtung 33 wird in Abhängigkeit von der Istwert-Feuchte F_{IST} zur Sollwert-Feuchte geregelt, wobei mit steigender Istwert-Feuchte F_{IST} über der Sollwert-Feuchte F_{SOLL} die Heizleistung der zweiten Heizungsvorrichtung 33 steigt. Das Ansteigen der Heizleistung der zweiten Heizungsvorrichtung 33 steigt über einen vorbestimmten Feuchtebereich der Raumfeuchte F_{IST}.

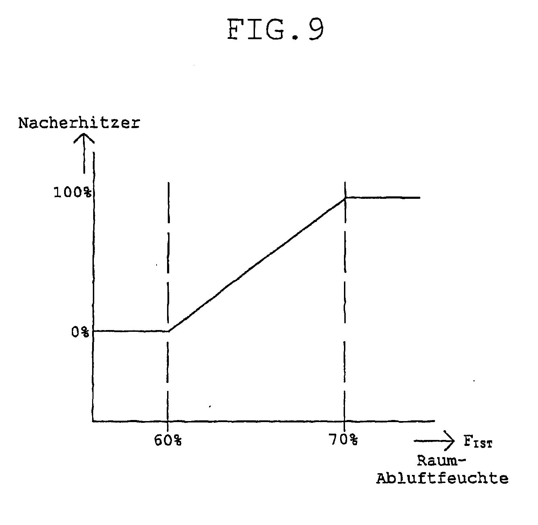

Dieser Zusammenhang ist in Fig. 9 dargestellt. Bei einer Raumfeuchte F_{IST} vor diesem Feuchtebereich ist die zweite Heizungsvorrichtung 33 nicht in Betrieb.

Bei einer Raumfeuchte F_{IST} nach diesem Feuchtebereich ist die zweite Heizungsvorrichtung 33 - der Nacherhitzer - mit seiner maximalen Leistung in Betrieb.

Durch eine hier nicht dargestellte Steuereinrichtung wird sichergestellt, dass das Fördervolumen der Zuluft während des Entfeuchtungsvorganges nicht erhöht wird und nur eine Mindestfrischluftmenge eingeblasen wird.

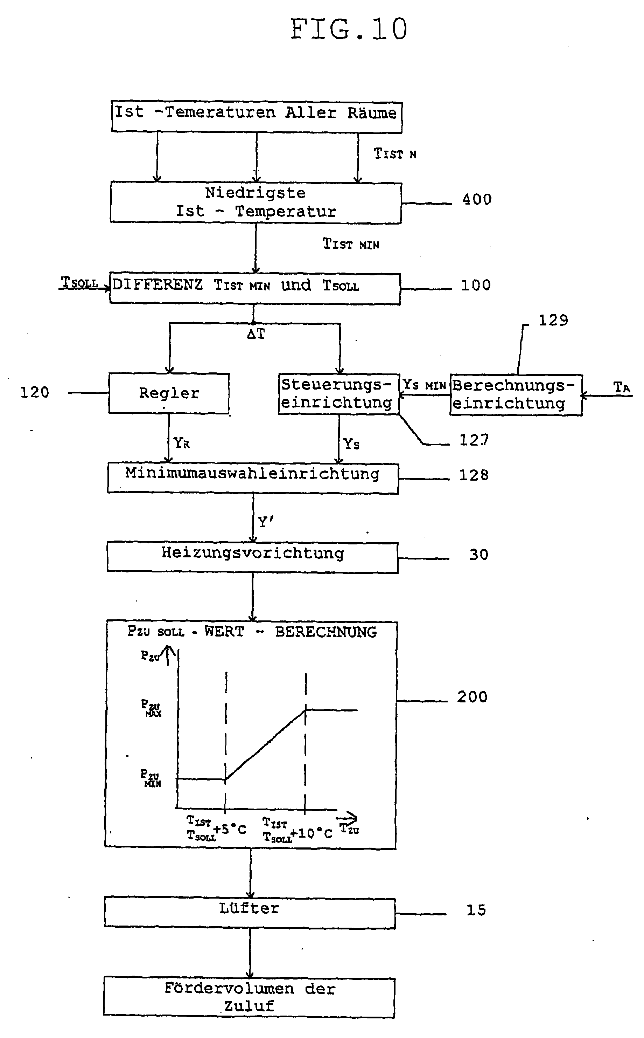

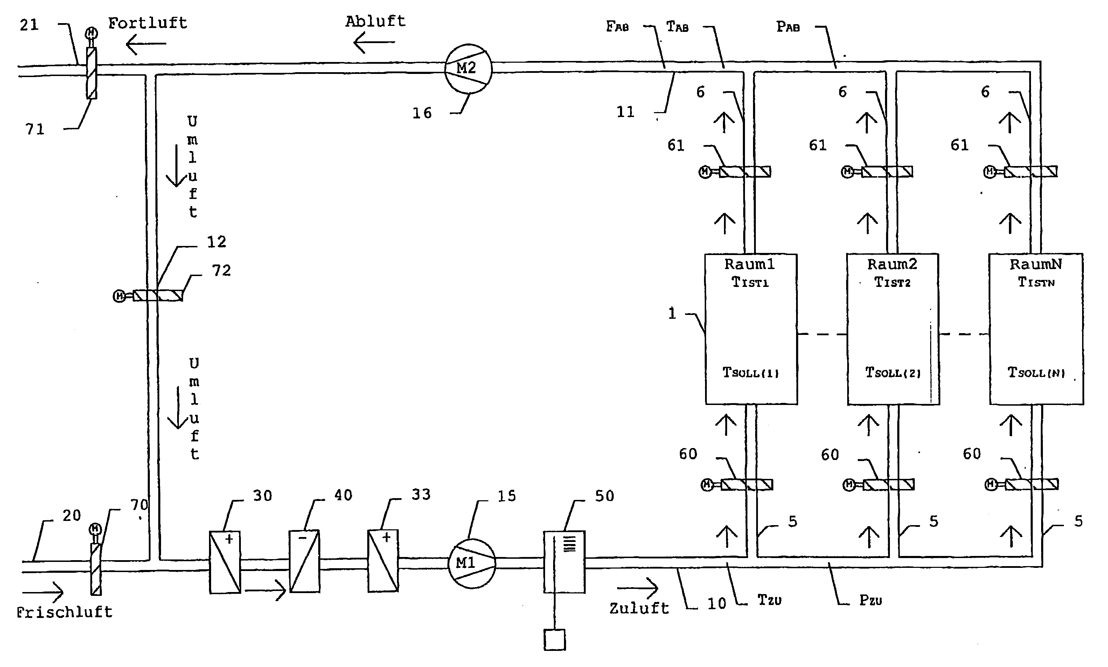

Zur besseren Veranschaulichung der Regelung wird im folgenden beispielhaft ein Aufwärmvorgang beschrieben, wie er üblicherweise morgens stattfindet. Die am Ablauf der Regelung beteiligten Blockschaltbildelemente sind in Fig. 10 dargestellt. Zum Zeitpunkt des Einschaltens der Klimatisierungsvorrichtung sollen die Ist-Temperaturen aller Räume 1 und die Temperatur der angesaugten Frischluft weit unter der Soll-Temperatur für die Räume 1 liegen. Da die Temperatur der Zuluft noch sehr niedrig ist, wird nicht mehr Zuluft in die Räume eingeblasen. Dazu wird vom Zuluftmotor 15 ein dem Mindestfrischluftvolumen entsprechender Mindestluftdruck P_{ZU MIN} erzeugt.

Bei niederer Außentemperatur unter 16 °C wird der Regler beim Start auf einen Wert nach der Außentemperatur vorbesetzt, damit die Anlage beim Starten keine Froststörung aufweist.

Von den Ist-Temperaturen aller zu klimatisierenden Räume 1 wählt die Minimumauswahleinrichtung 400 den niedrigsten Wert aus und leitet diesen dem Blockschaltbildelement 100 zu. Hier wird die Regeldifferenz Δ T zwischen dem Soll- und Istwert der Raumlufttemperaturen gebildet und dem Regler 120 und der Steuereinrichtung 127 zugeleitet. Der Regler 120 bestimmt aufgrund der Regeldifferenz Δ T einen Stellwert y_{R}. Gleichzeitig wird von der Steuereinrichtung 127 ein Stellwert y_{S} bestimmt, der einen maximal großen Wert annimmt, solange die Soll-Temperatur über der Ist-Temperatur liegt. Von den beiden Stellwerten y_{S} und y_{R} wählt die Minimumauswahleinrichtung 128 den kleineren aus, zu diesem Zeitpunkt die Stellgröße y_{R} des Reglers 120, und leitet ihn an die Heizungsvorrichtung 30 weiter. Diese wärmt die durch den Zuluftkanal 10 strömende Luft entsprechend auf. Damit steigt die Zulufttemperatur T_{ZU} kontinuierlich an. Ab einem vorgegebenen Temperaturschwellwert der Zuluft, beispielsweise T_{ZU SOLL} + 5 °C, wird mit weiter steigender Zulufttemperatur auch der Zuluftdruck erhöht, da die Regelung des Zuluftdrucks in Abhängigkeit von der Temperatur der Zuluft erfolgt. Das Fördervolumen erhöht sich und es findet eine maximal schnelle Aufheizung aller Räume statt.

Das erhöhte Luftvolumen besteht nicht nur aus Frischluft, sondern ein Teil der Abluft wird über den Umluftkanal 12 in Fig. 1 wieder der Zuluft zugeleitet. Auf diese Weise werden die Räume 1 ausreichend belüftet und gleichzeitig muss nicht unnötig viel Frischluft aufgeheizt werden.

Beim morgendlichen Aufheizen ist der Frischluftanteil nur - mindestens - so groß, damit der erforderliche Überdruck erreicht wird.

Ist der Aufheizvorgang abgeschlossen, senken handelsübliche Regler die Stellgröße y_{R} nicht ausreichend schnell ab, um einen Anstieg der Ist-Temperaturen der Räume 1 über die Soll-Temperatur zu verhindern. Deshalb sinkt die Stellgröße y_{S} der Steuereinrichtung 127 beim Überschreiten der Soll-Temperatur auf einen vorgegebenen Minimalwert y_{S MIN} ab. Jetzt wählt die Minimumauswahleinrichtung 128 den Wert y_{S} der Steuereinrichtung 127 aus und gibt ihn als y' an die Heizungsvorrichtung 30 weiter. Daraufhin sinkt die Zulufttemperatur wieder ab, und nach kurzer Zeit werden die Räume nur noch mit dem Mindestfrischluftvolumen versorgt, das ausreichend temperiert ist, um ein Absinken der Ist-Temperatur der Zuluft unter die Soll-Temperatur der Zuluft zu verhindern. Der Regler kann somit seinen Ausgang langsam verkleinern.

Es soll jetzt zusätzlich der Fall beschrieben werden, bei dem nur ein Raum aufgeheizt werden muss, während die anderen Räume schon die Soll-Temperatur erreicht haben. Von der Minimumauswahleinrichtung 400 wird die niedrigste Ist-Temperatur der unbeheizten Räume ausgewählt und zum Blockschaltbildelement 100 geleitet. Aufgrund der Regeldifferenz wird nun eine Stellgröße y' eingestellt und die Zulufttemperatur und der Zuluftdruck erhöhen sich entsprechend. Damit aber nicht auch die Räume mit sehr warmer Zuluft versorgt werden, welche die Soll-Temperatur bereits erreicht haben, regelt die Raumtemperaturindividualregelung 300 über Drosselklappen 60, 61 für jeden Raum separat das eingeblasene Luftvolumen. Auf diese Weise werden die Drosselklappen 60, 61 der Räume, bei denen die Ist-Temperatur die Soll-Temperatur schon erreicht hat, auf einen Mindestquerschnitt geschlossen, der sicherstellt, dass die Räume ausreichend belüftet werden. Gleichzeitig öffnen bei steigendem T_{ZU} die Drosselklappen 60, 61 des aufzuheizenden Raumes bis zu 100 % und P_{DIFF} bis zu 100 %, um eine schnelle Aufheizung zu ermöglichen. Erst wenn auch dieser Raum seine Soll-Temperatur erreicht hat, stellt die Klimatisierungsregelung wieder den Mindestbelüftungs- und Soll-Temperaturhaltezustand ein.

### Bezugszeichenliste

- 1: zu klimatisierender Raum
- 5: Zuluftleitungen
- 6: Abluftleitungen
- 10: Zuluftkanal
- 11: Abluftkanal
- 12: Umluftkanal
- 15: Zuluftmotor
- 16: Abluftmotor
- 20: Frischluftkanal
- 21: Fortluftkanal
- 30: Heizungsvorrichtung (Vorerhitzer)
- 33: Heizungsvorrichtung (Nacherhitzer)
- 40: Kühlvorrichtung
- 50: Befeuchtigungseinrichtung
- 60: Drosselklappe
- 61: Drosselklappe
- 70: Frischluftklappe
- 71: Fortluftklappe
- 72: Mischluftklappe
- 100: Blockschaltbildelement
- 120: Regler
- 125: nachgeordnete Steuereinrichtung
- 127: Schalteinrichtung / Steuereinrichtung
- 128: Minimumauswahleinrichtung/Steuereinrichtung
- 129: Berechnungseinrichtung
- 130: Temperaturregelung
- 170: Heizungsventil
- 200: P_{ZU SOLL}-Wert-Berechnungseinrichtung
- 230: Blockschaltbildelement
- 240: Druckregler
- 245: Grenzwertschalter
- 250: Druckregelung
- 285: Zuluftmotor
- 286: Regelstrecke
- 300: Blockschaltbildelement/Raumtemperatur-Individualregelung
- 310: Blockschaltbildelement
- 320: Regler
- 330: Drosselklappen
- 340: Blockschaltbildelement
- 400: Minimumauswahleinrichtung
- 500: Steuerungseinrichtung
- 550: Luftklappen
- 600: Blockschaltbildelement
- 610: Grenzwertschaltvorrichtung
- 620: Regler
- 630: Luftbefeuchter
- 640: Blockschaltbildelement
- 700: Blockschaltbildelement
- 710: P_{DIFF SOLL}-Wert-Berechnungseinrichtung
- 730: Druckregelung
- 740: Regler
- 760: Regelstrecke
- 785: Abluftmotor
- 786: Regelstrecke
- P_{AB}: Abluftdruck
- P_{ZU}: Zuluftdruck
- P_{ZU IST}: Zuluft-Istdruck
- P_{ZU SOLL}: Zuluftdruck-Sollwert
- P_{ZU MIN}: Mindestdruck

- T_{A}: Außentemperatur
- T_{RAUM IST 1}: Raumtemperatur
- T_{RAUM IST 2}: Raumtemperatur
- T_{RAUM IST N}: Raumtemperatur
- T_{RAUM IST MIN}: niedrigster wert
- T_{RAUM SOLL}: (maximale) Soll-Temperatur
- T_{RAUM SOLL N}: individuelle Soll-Temperatur
- T_{ZU}: Zulufttemperatur
- T_{ZU MIN}: minimal zulässige Zulufttemperatur
- y_{V}: Stellwert
- y': Stellwert
- y_{R}: Stellwert
- y_{S}: Stellsignal
- y_{S MIN}: sehr niedriges Stellwertsignal
- y_{P}: Stellgröße
- y_{P'}: Stellwert
- y_{T N}: Stellsignal
- y_{L}: Steuersignal

- F: relative Luftfeuchte
- F_{AB}: Feuchtigkeit der Abluft
- F_{AB MIN}: minimaler Feuchtegrenzwert
- F_{AB MAX}: maximaler Feuchtegrenzwert
- F_{AB SOLL}: Soll-Luftfeuchte
- F_{ZU}: Feuchtigkeit der Zuluft
- P_{DIFF}: Raumdifferenzdruck
- P_{DIFF IST}: Istwert des Raumdifferenzdruckes
- P_{DIFF SOLL}: Sollwert des Raumdifferenzdruckes

- Δ P: Druckdifferenz
- Δ T: Temperaturdifferenz
- Δ T_{N}: Regeldifferenz
- Δ F_{AB}: Feuchtedifferenz
- Δ F_{AB'}: korrigierte Regeldifferenz

## Patentansprüche

1. Klimatisierungsvorrichtung mit zumindest einem zu klimatisierenden Raum (1), bei dem zumindest die Temperatur durch Belüftung mit geheizter oder gekühlter Zuluft auf einen vorgegebenen Temperatur-Sollwert (T_{RAUM SOLL}) geregelt wird, mit einem Zuluftmotor (15), der die Zuluft über einen Zuluftkanal (10) dem zu klimatisierenden Raum (1) zuführt, mit einer in den Zuluftkanal (10) eingebrachten Kühl- und/oder Heizungsvorrichtung (30, 40, 33) zur Kühlung oder Erwärmung der Zuluft, mit einem Abluftkanal (11) und mit einem Abluftmotor (16), der die Abluft über einen Abluftkanal (11) saugt, **dadurch gekennzeichnet, dass** die Klimatisierungs vorrichtung eine Druckregelung eines Differenzdruckes (P_{DIFF} _{SOLL}) gegenüber einem Außendruck (P_{A}) in dem zu klimatisierenden Raum (1) umfaßt, und zum Zwecke einer besseren Durchmischung der Raumluft mit zugeführter Luft der Differenzdruck (P_{DIFF SOLL}) so bemessen ist, dass ein vorbestimmter Überdruck gegenüber dem Außendruck (P_{A}) in dem Raum (1) gewahrt wird, wobei die Regelung des Raumüberdrucks (P_{DIFF SOLL}) durch den Abluftmotor (16) erfolgt.

2. Klimatisierungsvorrichtung nach Anspruch 1, **dadurch gekennzeichnet, dass** der Raumüberdruck (P_{DIFF SOLL}) in Abhängigkeit von der Außentemperatur (T_{A}) und/oder der Zulufttemperatur und/oder dem Zuluftdruck (P_{ZU}) bestimmt wird.

3. Klimatisierungsvorrichtung nach Anspruch 1, **dadurch gekennzeichnet, dass** der Istwert für den Regler des Abluftmotors (16) durch den Kanaldifferenzdruck gebildet wird, der sich aus der Differenz zwischen dem absoluten Wert des Druckes (P_{ZU}) im Zuluftkanal (10) und dem absoluten Wert des Druckes (P_{AB}) im Abluftkanal (11) ergibt.

4. Klimatisierungsvorrichtung nach Anspruch 1, **dadurch gekennzeichnet, dass** sich der Istwert für den Regler des Abluftmotors (16) aus der Differenz zwischen dem Außendruck (P_{A}) und dem Raumdruck (P_{RAUM IST}) ergibt.

5. Klimatisierungsvorrichtung nach einem der vorangehenden Ansprüche, **dadurch gekennzeichnet, dass** der Raumüberdruck sich lediglich über einen vorbestimmten Temperaturbereich der Außentemperatur (T_{A}) und/oder der Zulufttemperatur (T_{ZU}) mit Änderung der Außentemperatur (T_{A}) bzw. der Zulufttemperatur (T_{ZU}) ändert, wobei bei einer Außentemperatur (T_{A}) bzw. Zulufttemperatur (T_{ZU}) vor diesem Temperaturbereich der Raumüberdruck jeweils eine bestimmte konstante Größe und bei einer Außentemperatur (T_{A}) bzw. Zulufttemperatur (T_{ZU}) nach diesem Temperaturbereich der Raumüberdruck jeweils eine weitere bestimmte konstante Größe aufweist.

6. Klimatisierungsvorrichtung nach Anspruch 5, **dadurch gekennzeichnet, dass** in dem Temperaturbereich der Raumdruck (P_{RAUM}) mit steigender Außentemperatur (T_{A}) von einem Maximalüberdruck (P_{RAUM MAX}) zu einem Minimalüberdruck (P_{RAUM MIN}) fällt.

7. Verfahren zur Klimatisierung eines Raumes (1) mit einer Klimatisierungsvorrichtung mit einem Zuluftmotor (15), der die Zuluft über einen Zuluftkanal (10) dem zu klimatisierenden Raum (1) zuführt, mit einer in den Zuluftkanal (10) eingebrachten Kühlund/oder Heizvorrichtung (30, 40, 33) zur Kühlung oder Erwärmung der Zuluft, mit einem Abluftkanal (11) und mit einem Abluftmotor (16), der die Abluft über einen Abluftkanal (11) saugt, wobei die Temperatur in dem zu klimatisierenden Raum (1) mit geheizter oder gekühlter Zuluft auf einen vorgegebenen Temperatur-Sollwert (T_{RAUM SOLL}) geregelt wird, **dadurch gekennzeichnet, dass** das Verfahren eine Druckregelung eines Differenzdruckes (P_{DIFF SOLL}) gegenüber einem Außendruck (P_{A}) in dem zu klimatisierenden Raum (1), umfaßt, und zum Zwecke einer besseren Durchmischung der Raumluft mit zugeführter Luft der Differenzdruck (P_{DIFF SOLL}) so bemessen ist, dass ein vorbestimmter Überdruck gegenüber dem Außendruck (P_{A}) in dem Raum (1) gewahrt wird, wobei die Regelung des Raumüberdrucks (P_{DIFF SOLL}) durch den Abluftmotor (16) erfolgt.

8. Verfahren nach Anspruch 7, **dadurch gekennzeichnet, dass** der Raumüberdruck (P_{DIFF SOLL}) in Abhängigkeit von der Außentemperatur (T_{A}) und/oder der Zulufttemperatur und/oder dem Zuluftdruck (P_{ZU}) bestimmt wird.

9. Verfahren nach Anspruch 7, **dadurch gekennzeichnet, dass** der Istwert für den Regler des Abluftmotors (16) durch den Kanaldifferenzdruck gebildet wird, der sich aus der Differenz zwischen dem absoluten Wert des Druckes (P_{ZU}) im Zuluftkanal (10) und dem absoluten Wert des Druckes (P_{AB}) im Abluftkanal (11) ergibt.

10. Verfahren nach Anspruch 7, **dadurch gekennzeichnet, dass** sich der Istwert für den Regler des Abluftmotors (16) aus der Differenz zwischen dem Außendruck (P_{A}) und dem Raumdruck (P_{RAUM IST}) ergibt.

11. Verfahren nach einem der Ansprüche 7 bis 10, **dadurch gekennzeichnet, dass** der Raumüberdruck sich lediglich über einen vorbestimmten Temperaturbereich der Außentemperatur (T_{A}) und/oder der Zulufttemperatur (T_{ZU}) mit Änderung der Außentemperatur (T_{A}) bzw. der Zulufttemperatur (T_{ZU}) ändert, wobei bei einer Außentemperatur (T_{A}) bzw. Zulufttemperatur (T_{ZU}) vor diesem Temperaturbereich der Raumüberdruck jeweils eine bestimmte konstante Größe und bei einer Außentemperatur (T_{A}) bzw. Zulufttemperatur (T_{ZU}) nach diesem Temperaturbereich der Raumüberdruck jeweils eine weitere bestimmte konstante Größe aufweist.

12. Verfahren nach Anspruch 11, **dadurch gekennzeichnet, dass** in dem Temperaturbereich der Raumdruck (P_{RAUM}) mit steigender Außentemperatur (T_{A}) von einem Maximalüberdruck (P_{RAUM MAX}) zu einem Minimalüberdruck (P_{RAUM MIN}) fällt.

## Claims

1. Air-conditioning device with at least one room (1) to be air-conditioned, in which the temperature is at least controlled by ventilation with heated or cooled delivery air to a preset temperature desired value (T_{ROOM DESIRED}) , with a delivery air motor (15) which supplies the delivery air via a delivery air duct (10) to the room (1) to be air-conditioned, with a cooling and/or heating device (30, 40, 33), built into the delivery air duct (10), for cooling or heating the delivery air, with a discharge air duct (11) and with a discharge air motor (16) which extracts the discharge air via a discharge air duct (11),
**characterised in that** the air-conditioning device comprises pressure control of a differential pressure (P_{DIFF DESIRED}), compared with an outside pressure (P_{A}) , in the room (1) to be air-conditioned and for the purpose of better blending of the air in the room with supplied air the differential pressure (P_{DIFF DESIRED}) is so dimensioned that a predetermined excess pressure compared with the outside pressure (P_{A}) is maintained in the room (1), control of the excess pressure (P_{DIFF} _{DESIRED}) in the room being carried out by means of the discharge air motor (16).

2. Air-conditioning device according to claim 1, **characterised in that** the excess pressure in the room (P_{DIFF DESIRED}) is determined as a function of the outside temperature (T_{A}) and/or the temperature of the delivery air and/or the pressure of the delivery air (P_{ZU}).

3. Air-conditioning device according to claim 1, **characterised in that** the actual value for the controller of the discharge air motor (16) is formed by the differential pressure in the duct resulting from the difference between the absolute value of the pressure (P_{ZU}) in the delivery air duct (10) and the absolute value of the pressure (P_{AB}) in the discharge air duct (11).

4. Air-conditioning device according to claim 1, **characterised in that** the actual value for the controller of the discharge air motor (16) results from the difference between the outside pressure (P_{A}) and the room pressure (P_{ROOM ACTUAL}).

5. Air-conditioning device according to one of the preceding claims, **characterised in that** the excess pressure in the room changes only over a predetermined temperature range of the outside temperature (T_{A}) and/or the delivery air temperature (T_{ZU}) with a change in the outside temperature (T_{A}) or the delivery air temperature (T_{ZU}), wherein with an outside temperature (T_{A}) or delivery air temperature (T_{ZU}) before this temperature range the excess pressure in the room has in each case a specific constant volume and with an outside temperature (T_{A}) or delivery air temperature (T_{ZU}) after this temperature range the excess pressure in the room has in each case a further specific constant volume.

6. Air-conditioning device according to claim 5, **characterised in that** in the temperature range the room pressure (P_{ROOM}) drops with rising outside temperature (T_{A}) from a maximum excess pressure (P_{ROOM MAX)} to a minimum excess pressure (P_{ROOM MIN}).

7. Method for air-conditioning a room (1) with an air-conditioning device with a delivery air motor (15) which supplies the delivery air via a delivery air duct (10) to the room (1) to be air-conditioned, with a cooling and/or heating device (30, 40, 33) built into the delivery air duct (10) for cooling or heating the delivery air, with a discharge air duct (11) and with a discharge air motor (16) which extracts the discharge air via a discharge air duct (11), wherein the temperature in the room (1) to be air-conditioned is controlled with heated or cooled delivery air to a preset temperature desired value (T_{ROOM DESIRED}), **characterised in that** the method comprises pressure control of a differential pressure (P_{DIFF DESIRED}), compared with an outside pressure (P_{A}), in the room (1) to be air-conditioned and for the purpose of better blending of the air in the room with supplied air the differential pressure (P_{DIFF DESIRED}) is so dimensioned that a predetermined excess pressure compared with the outside pressure (P_{A}) is maintained in the room (1), control of the excess pressure (P_{DIFF DESIRED}) in the room being carried out by the discharge air motor (16).

8. Method according to claim 7, **characterised in that** the excess pressure in the room (P_{DIFF DESIRED}) is determined as a function of the outside temperature (T_{A}) and/or the delivery air temperature and/or the delivery air pressure (P_{ZU}).

9. Method according to claim 7, **characterised in that** the actual value for the controller of the discharge air motor (16) is formed by the differential pressure in the duct resulting from the difference between the absolute value of the pressure (P_{ZU}) in the delivery air duct (10) and the absolute value of the pressure (P_{AB}) in the discharge air duct (11).

10. Method according to claim 7, **characterised in that** the actual value for the controller of the air discharge motor (16) results from the difference between the outside pressure (P_{A}) and the room pressure (P_{ROOM} _{ACTUAL}).

11. Method according to one of claims 7 to 10, **characterised in that** the excess pressure in the room changes only over a predetermined temperature range of the outside temperature (T_{A}) and/or the delivery air temperature (T_{ZU}) with a change in the outside temperature (T_{A}) or the delivery air temperature (T_{ZU}), wherein with an outside temperature (T_{A}) or delivery air temperature (T_{ZU}) before this temperature range the excess pressure in the room has in each case a specific constant volume and with an outside temperature (T_{A}) or delivery air temperature (T_{ZU}) after this temperature range the excess pressure in the room has in each case a further specific constant volume.

12. Method according to claim 11, **characterised in that** in the temperature range the room pressure (P_{ROOM}) drops with rising outside temperature (T_{A}) from a maximum excess pressure (P_{ROOM MAX}) to a minimum excess pressure (P_{ROOM MIN}).

## Revendications

1. Dispositif de conditionnement d'air avec au moins un local à climatiser (1), pour lequel au moins la température est régulée par ventilation à air amené, chauffé ou refroidi sur une valeur consigne prédéfinie de la température (T_{RAUM SOLL}), avec un moteur d'amenée d'air (15) qui conduit au local à climatiser (1) l'air amené par un canal d'amenée d'air (10), avec un dispositif de refroidissement et/ou de chauffage (30, 40, 33) ménagé dans le canal d'amenée d'air (10) pour le refroidissement ou le réchauffement de l'air amené, avec un canal d'évacuation d'air (11) et avec un moteur d'évacuation d'air (16) qui aspire l'air vicié par un canal d'évacuation d'air (11), **caractérisé en ce que** le dispositif de conditionnement d'air comprend un dispositif de régulation de pression pour une pression différentielle (P_{DIFF SOLL}) par rapport à une pression extérieure (P_{A}) dans le local à climatiser (1) et afin d'obtenir un meilleur mélange de l'air du local avec l'air amené, la différence de pression (P_{DIFF SOLL}) est mesurée de telle sorte qu'une surpression prédéfinie est préservée par rapport à la pression extérieure (P_{A}) dans le local (1), moyennant quoi la régulation de la surpression du local (P_{DIFF SOLL}) a lieu grâce au moteur d'évacuation d'air (16).

2. Dispositif de conditionnement d'air selon la revendication 1, **caractérisé en ce que** la surpression du local (P_{DIFF SOLL}) est déterminée en relation avec la température extérieure (T_{A}) et/ou la température de l'air amené et/ou la pression de l'air amené (P_{ZU}).

3. Dispositif de conditionnement d'air selon la revendication 1, **caractérisé en ce que** la valeur effective pour le régulateur du moteur d'évacuation d'air (16) est constituée de la différence de pression du canal qui résulte de la différence entre la valeur absolue de la pression (P_{ZU}) dans le canal d'amenée d'air (10) et la valeur absolue de la pression (P_{AB}) dans le canal d'évacuation d'air (11).

4. Dispositif de conditionnement d'air selon la revendication 1, **caractérisé en ce que** la valeur effective pour le régulateur du moteur d'évacuation d'air (16) résulte de la différence entre la pression extérieure (P_{A}) et la pression du local (P_{RAUM IST}).

5. Dispositif de conditionnement d'air selon l'une quelconque des revendications précédentes, **caractérisé en ce que** la surpression du local change seulement en restant dans une zone de température prédéfinie de la température extérieure (T_{A}) et/ou de la température de l'air amené (T_{ZU}) lorsque la température extérieure (T_{A}) et/ou la température de l'air amené (T_{ZU}) change, moyennant quoi dans le cas d'une température extérieure (T_{A}) et/ou d'une température de l'air amené (T_{ZU}) en dessous de cette zone de température, la surpression du local présente à chaque fois une valeur constante définie, et dans le cas d'une température extérieure (T_{A}) et/ou d'une température de l'air amené (T_{ZU}) au-delà de cette zone de température, la surpression du local présente à chaque fois une autre valeur constante définie.

6. Dispositif de conditionnement d'air selon la revendication 5, **caractérisé en ce que** dans la zone de température, la pression du local (P_{RAUM}) chute d'une surpression maximale (P_{RAUM MAX}) à une surpression minimale (P_{RAUM MIN}) lorsque la température extérieure (T_{A}) augmente.

7. Procédé de conditionnement d'air d'un local (1) avec un appareil de conditionnement d'air avec un moteur d'amenée d'air (15) qui conduit à l'espace à climatiser (1) l'air amené par un canal d'amenée d'air (10), avec un dispositif de refroidissement et/ou de chauffage (30, 40, 33) ménagé dans le canal d'amenée d'air (10) pour le refroidissement ou le réchauffement de l'air amené, avec un canal d'évacuation d'air (11) et avec un moteur d'évacuation d'air (16) qui aspire l'air vicié par un canal d'évacuation d'air (11), moyennant quoi la température du local à climatiser (1) avec de l'air chauffé ou refroidi est régulée sur une valeur consigne de température (T_{RAUM SOLL}) prédéfinie, **caractérisé en ce que** le procédé comprend un dispositif de régulation d'une pression différentielle (P_{DIFF SOLL}) par rapport à une pression extérieure (P_{A}) dans le local à climatiser (1), et afin d'obtenir un meilleur mélange de l'air du local avec l'air amené, la différence de pression (P_{DIFF SOLL}) est mesurée de telle sorte qu'une surpression prédéfinie est préservée par rapport à la pression extérieure (P_{A}) dans l'espace (1), moyennant quoi la régulation de la surpression du local (P_{DIFF SOLL}) a lieu grâce au moteur d'évacuation d'air (16).

8. Procédé selon la revendication 7, **caractérisé en ce que** la surpression du local (P_{DIFF SOLL}) est définie en relation étroite avec la température extérieure (T_{A}) et/ou la température de l'air amené et/ou de la pression de l'air amené (P_{ZU}).

9. Procédé selon la revendication 7, **caractérisé en ce que** la valeur effective pour le régulateur du moteur d'évacuation d'air (16) est constituée de la pression différentielle du canal qui résulte de la différence entre la valeur absolue de la pression (P_{ZU}) dans le canal d'amenée d'air (10) et de la valeur absolue de la pression (P_{AB}) dans le canal d'évacuation d'air (11).

10. Procédé selon la revendication 7, **caractérisé en ce que** la valeur effective pour le régulateur du moteur d'évacuation d'air (16) résulte de la différence entre la pression extérieure (PA) et la pression du local (P_{RAUM IST}).

11. Procédé selon l'une quelconque des revendications 7 à 10, **caractérisé en ce que** la surpression du local change seulement en restant dans une zone de température prédéfinie de la température extérieure (T_{A}) et/ou de la température de l'air amené (T_{ZU}) lorsque la température extérieure (T_{A}) et/ou la température de l'air amené (T_{ZU}) change, moyennant quoi dans le cas d'une température extérieure (T_{A}) et/ou d'une température de l'air amené (T_{ZU}) en dessous de cette zone de température, la surpression du local présente à chaque fois une ampleur constante définie, et dans le cas d'une température extérieure (T_{A}) et/ou d'une température de l'air amené (T_{ZU}) au-delà de cette zone de température, la surpression du local présente à chaque fois une autre ampleur constante définie.

12. Procédé selon la revendication 11, **caractérisé en ce que** dans la zone de température, la pression ambiante (P_{RAUM}) chute d'une surpression maximale (P_{RAUM} _{MAX}) à une surpression minimale (P_{RAUM MIN}) lorsque la température extérieure (T_{A}) augmente.
